# EUROPÄISCHE PATENTANMELDUNG

(11) **EP 3 961 527 A1**
(43) Veröffentlichungstag der Anmeldung: **02.03.2022**
(21) Anmeldenummer: 20192618.5
(22) Anmeldetag: 25.08.2020
(51) Int. Cl.: G06Q 10/06, G06Q 10/00

(54) **BESTIMMUNG EINER LAST EINER ANTRIEBSVORRICHTUNG**

(71) Anmelder: Siemens Aktiengesellschaft, 80333 München (DE)
(72) Erfinder: Deeg, Christian, 90518 Altdorf (DE); Leipold, Michael, 90491 Nürnberg (DE); Manger, Matthias, 90762 Fürth (DE); Wacker, Bernd, 91074 Herzogenaurach (DE)

(57) **Zusammenfassung**

Die Erfindung betrifft ein Verfahren zur Bestimmung einer Last einer Antriebsvorrichtung (1), wobei die Antriebsvorrichtung (1) mit zumindest einer Sensorik (2) versehen ist, welche mit einer Recheneinheit (3) gekoppelt wird, mittels der Sensorik (2) unterschiedliche, die Antriebsvorrichtung (1) im Betrieb betreffende Daten erfasst werden, die erfassten Daten an die Recheneinheit (3) übertragen werden und die erfassten Daten mit in der Recheneinheit (3) hinterlegten lasttypischen Informationen verglichen werden, wobei anhand der verglichenen Daten ein Typ der Last bestimmt wird. Des Weiteren betrifft die Erfindung eine Vorrichtung zur Bestimmung einer Last einer Antriebsvorrichtung (1).

## Beschreibung

Die Erfindung betrifft ein Verfahren zur Bestimmung einer Last einer Antriebsvorrichtung und eine Vorrichtung zur Bestimmung einer Last einer Antriebsvorrichtung.

Grundsätzlich ist einem Antrieb eine Antriebsaufgabe zugewiesen. Die Antriebsaufgabe wird durch eine Last bestimmt. Oftmals erfolgt eine Auslegung der Antriebsaufgabe empirisch. Beispielsweise wird mit Hilfe von Temperatursensoren eine Temperatur, beispielsweise eine Wicklungstemperatur, oder mit Hilfe von Schwingungssensoren wird eine Vibration eines Antriebes gemessen. Aus der Temperaturmessung kann eine Lebensdauer eines Wicklungssystems bestimmt werden. Schwingungssensoren erlauben beispielsweise eine Aufnahme und Berechnung von Zeitreihen, beispielsweise von Amplituden, und/oder eine Berechnung von Frequenzspektren, die wiederum Aufschluss auf eine Veränderung geben. Hieraus lassen sich mögliche Fehler und möglicher Verschleiß ableiten. Zur Berechnung einer Restlebensdauer (engl.: Rest of useful lifetime, kurz RUL) gibt es mathematische Verfahren. Diese basieren auf Temperatur und mechanischen Größen, wie z.B. Schwingungen.

Aus dem Stand der Technik sind Verfahren zur Bestimmung einer Lastmomentkennlinie bekannt. Zum Beispiel wird ein Anlaufverhalten eines Antriebes durch ein vom Motor entwickeltes Drehmoment und Gegenmomente einer anzutreibenden Maschine bestimmt. Zum Beispiel werden unterschiedliche Lastmomente oder gleiche Lastmomente oder Kennlinien zyklisch oder azyklisch zeitlich aneinandergereiht.

Zum Beispiel ist bekannt, anhand eines gemessenen elektrischen Stromes Lastmuster zu erkennen. Dadurch kann auf das Drehmoment geschlossen werden und es ist auch möglich, eine Rückwirkung der mechanischen Last auf den Strom zu messen, z.B. zur Bestimmung einer Harmonischen oder eines Wechselanteils (Ripple Content) auf den Stromphasen bzw. periodisch wiederkehrender oder pulsierender Muster auf dem Phasenstromverlauf. Eine Strommessung kann über Stromwandler erfolgen oder über Kleinsignalwandler. Jedoch ist die Strommessung nicht immer möglich, da es einer Zugänglichkeit für elektrische Wandler bedarf. Dies erfordert sowohl einen elektrischen als auch mechanischen Zugang, beispielsweise über Kabel, Einbauraum, Schaltkasten und/oder Klemmkasten.

Der Erfindung liegt die Aufgabe zu Grunde, ein gegenüber dem Stand der Technik verbessertes Verfahren zur Bestimmung einer Last und eine verbesserte Vorrichtung zur Bestimmung einer Last einer Antriebsvorrichtung anzugeben.

Hinsichtlich des Verfahrens wird die Aufgabe erfindungsgemäß durch die in Anspruch 1 angegebenen Merkmale gelöst. Hinsichtlich der Vorrichtung wird die Aufgabe erfindungsgemäß durch die in Anspruch 8 angegebenen Merkmale gelöst.

Vorteilhafte Ausgestaltungen der Erfindung sind Gegenstand der Unteransprüche.

In einem Verfahren zur Bestimmung einer Last einer Antriebsvorrichtung wird die Antriebsvorrichtung mit zumindest einer Sensorik, insbesondere lokal, versehen, welche mit zumindest einer Recheneinheit gekoppelt wird, wobei mittels der Sensorik unterschiedliche, die Antriebsvorrichtung im Betrieb betreffende Daten erfasst werden. Die erfassten Daten werden an die Recheneinheit übertragen, wobei die erfassten Daten mit in der Recheneinheit hinterlegten lasttypischen Informationen verglichen werden. Anhand der verglichenen Daten wird anschließend ein Typ der Last bestimmt.

Die Sensorik wird also verwendet, um die Antriebsvorrichtung im Betrieb betreffende Daten zu ermitteln und schließlich den Typ der Last zu erkennen bzw. einen Rückschluss auf die Last und somit auf die Antriebsaufgabe zu ziehen. Zum Beispiel wird festgestellt, für welche Art von Antrieb die Last aufzubringen ist. Durch Bestimmung des Typs der Last kann auf eine mechanische und/oder elektrische Auslastung der Antriebsvorrichtung geschlossen werden. Der Typ der Last wird beispielsweise "offline" über eine externe Datenbank bestimmt, auf welcher statistische Vergleiche und mathematische Berechnungen erfolgen. Die Recheneinheit ist beispielsweise eine Cloud und/oder ein Server. Die Recheneinheit umfasst beispielsweise zumindest eine Datenbank, in welcher die lasttypischen Informationen hinterlegt sind. Die Recheneinheit kann jederzeit auf diese Information zugreifen.

Die Antriebsvorrichtung wird beispielsweise in Förderanlagen, Pumpen, Kompressoren, Lüfter, Werkzeugmaschinen und in anderen industriellen Anwendungen verwendet.

Mittels des Verfahrens ist es in besonders vorteilhafter Weise möglich, aus den ermittelten Informationen zum Typ der Last eine Lebensdauer von sowohl einzelnen Komponenten der Antriebsvorrichtung als auch der Antriebsvorrichtung selbst zu ermitteln.

In vielen Fällen ist nicht bekannt, für welchen Zweck und für welche Last die Antriebsvorrichtung eingesetzt wird. Die Antriebsvorrichtung ist beispielsweise ein pneumatischer Antrieb, ein hydraulischer Antrieb oder ein elektrischer Antrieb. Ein elektrischer Antrieb kann beispielsweise ein elektrischer Motor oder ein elektrischer Antrieb mit einem elektrischen Motor, der durch einen drehzahlvariablen Umrichter angetrieben wird, sein. Herkömmlich werden Universalmotoren oder Standardmotoren katalogmäßig bestellt. Die Antriebsaufgabe muss zum Zeitpunkt der Bestellung nicht vorliegen. Die Antriebsaufgabe und/oder die Last bestimmt eine mechanische und elektrische Auslastung der Antriebsvorrichtung. Der elektrische Strom ist als Messgröße oftmals nicht zugänglich, da die Messung in einer Schaltanlage vorgenommen wird. Ohne Angaben zum Zweck und zur Last der Antriebsvorrichtung ist eine Lebensdauerbestimmung nicht möglich. Die Last bestimmt einen Verschleiß, z.B. einen mechanischen Verschleiß an Lagern und Lagerschilden der Antriebsvorrichtung. Der im Betrieb genutzte elektrische Strom und ein Moment führen zur thermischen Erwärmung, welche wiederum zur Alterung einer Wicklung in Ständer oder Rotor führen.

Eine Ausgestaltung der Erfindung sieht vor, anhand der ermittelten Informationen zum Lasttyp die Lebensdauer der Antriebsvorrichtung zu bestimmen. Die Lebensdauerbestimmung gibt einen Hinweis auf eine technisch-wirtschaftliche Nutzung wie auch eine Nutzungsdauer, während der der Antrieb sinnvoll betrieben werden kann. Es werden also eine Lebensdauer und eine Restlebensdauer (kurz: RUL, engl.: Rest of useful lifetime) unter Zuhilfenahme ermittelbarer Informationen zur Last bestimmt.

In einer Weiterbildung werden die Informationen zum Typ der Last verwendet, um Einstellparameter beispielsweise einer elektrischen Antriebsvorrichtung zu ermitteln. Herkömmlich sind die Einstellparameter der elektrischen Antriebsvorrichtung zum Zeitpunkt einer Inbetriebnahme bzw. Inbetriebsetzung der Antriebsvorrichtung bereits vorgegeben. In der Regel werden Einstellparameter zur Hochlaufkurve, Bremskurve und dergleichen einmalig eingestellt und nachher nicht mehr optimiert. In Abhängigkeit der Informationen zum Typ der Last sind die Einstellparameter jederzeit neu ermittelbar und ausgebbar, so dass die Antriebsvorrichtung zur Erhöhung ihrer Lebensdauer angepasst werden kann.

In vielen Fällen stehen einem Experten keine Informationen über die Last zur Verfügung. Die Last allerdings kann ebenfalls eine so genannte RUL haben. Zum Beispiel ist an einem elektrischen Motor eine Pumpe angeschlossen, deren Pumpenrad mechanisch verschleißt. Dieser Verschleiß ist vorausschauend an einer ansteigenden Last und/oder an einem ansteigenden Vibrationsparameter erkennbar. Damit besteht eine Schwierigkeit, eine klare Diagnose zu treffen im Hinblick auf eine korrekte Differenzierung von Verschleißbedingungen, von Fehlern oder verschleißbedingten Abnutzungen in Komponenten der Antriebsvorrichtung oder in der angetriebenen Last.

In einer weiteren Ausführungsform wird die Sensorik mit zumindest einer Datenverarbeitungseinheit gekoppelt, mittels welcher die erfassten Daten verarbeitet und an die Recheneinheit übertragen werden. Zum Beispiel wird die Antriebsvorrichtung nachträglich mit der Datenverarbeitungseinheit versehen bzw. aufgerüstet. Alternativ kann die Datenverarbeitungseinheit bereits Teil der Antriebsvorrichtung sein. Alternativ kann die Datenverarbeitungseinheit Teil der Sensorik sein. Die Antriebsvorrichtung kann beispielsweise nachträglich mit der Sensorik sowie mit der Datenverarbeitungseinheit aufgerüstet werden. Zum Beispiel ist die Datenverarbeitungseinheit ein so genanntes Edge-Gerät.

In einer weiteren Ausführungsform werden mittels der Sensorik Daten aus zumindest einer Temperaturmessung, Vibrationsmessung, Luftschallmessung, Drehfeldmessung, Schlupfmessung und/oder Strommessung erfasst. Die mittels der Sensorik erfassten Daten werden an die Datenverarbeitungseinheit übermittelt, welche anschließend die Daten an der Antriebsvorrichtung beispielsweise lokal auswertet und analysiert oder verzögerungsfrei vorverarbeitet.

In einer weiteren Ausführungsform werden die erfassten Daten analysiert und eine zeitliche Abfolge der Daten und/oder eine kontinuierliche Reihe von Messungen ermittelt. Die Analyse der erfassten Daten und Ermittlung der zeitlichen Abfolge und/oder der Reihe von Messungen werden bzw. wird von der Datenverarbeitungseinheit durchgeführt. Anschließend werden diese Daten an die Recheneinheit übermittelt. Zum Beispiel werden Veränderungen und/oder Abweichungen der Last über einen Zeitraum ermittelt und überwacht. Beispielsweise werden ermittelte Zeitreihen der Daten für statistische Vergleiche und mathematische Berechnungen herangezogen. Dadurch ist ermöglicht, Diagnosen zu Fehlern und zur Restlebensdauer zu treffen als auch Diagnosen zu Einstellparametern zu treffen.

Anhand der Diagnosen werden Einstellparameter zur Ausbesserung der Fehler und zur Erhöhung der Restlebensdauer der Antriebsvorrichtung ermittelt und vorgeschlagen. In einer automatisierten Umgebung können die ermittelten und vorgeschlagenen Einstellparameter direkt an eine Steuerung der Antriebsvorrichtung übertragen und von dieser umgesetzt werden. D.h., ein operativer Eingriff auf die Steuerung kann automatisch erfolgen. Alternativ oder zusätzlich wird ein Vorschlag zur Änderung der Einstellparameter und Umparametrierung der Antriebsvorrichtung ausgegeben. Einem Nutzer können so genannte Key Performance Indicators (kurz KPI) und Optimierungspotentiale hinsichtlich des Betriebs der Antriebsvorrichtung angezeigt werden. In einer Weiterbildung werden dynamische und operative Warngrenzen eingestellt.

Zum Beispiel kann ein Engineering-Experte, der den Antrieb auslegt, bei Betrachtung der Analyse der Informationen zur Last Erfahrungen gewinnen, um zukünftig eine Antriebsaufgabe optimaler auszulegen durch Auswahl des Motors oder/und Umrichters. Des Weiteren kann ein Entwicklungsingenieur durch eine Vielzahl von Rückmeldungen aus dem operativen Betrieb einen Antriebsstrang bzw. ein Antriebssystem (Motor/Getriebe/ Umrichter/Last) hinsichtlich Design und Konstruktion optimieren. Dadurch können Bearbeitungszeiten verkürzt und time-tomarket für neue Typen verbessert werden.

In einer weiteren Ausführungsform sind als lasttypische Informationen Daten aus vorherigen Messungen an derselben Antriebsvorrichtung hinterlegt. D.h., die in der Recheneinheit, insbesondere in der Datenbank, hinterlegten lasttypischen Informationen basieren auf Daten, die aus einer Anzahl von Messungen an derselben Antriebsvorrichtung ermittelt wurden. Beispielsweise werden die neu erfassten Daten und Zeitreihen mit bereits früher gewonnen Daten derselben Antriebsvorrichtung verglichen, insbesondere statistisch verglichen.

In einer weiteren Ausführungsform sind als lasttypische Informationen Daten aus vorherigen Messungen an unterschiedlichen Antriebsvorrichtungen hinterlegt. D.h., die in der Recheneinheit, insbesondere in der Datenbank, hinterlegten lasttypischen Informationen basieren auf Daten, die aus einer Anzahl von Messungen unterschiedlicher Antriebsvorrichtungen ermittelt wurden. Beispielsweise werden die neu erfassten Daten und Zeitreihen mit bereits früher gewonnenen Daten anderer Antriebsvorrichtungen verglichen, insbesondere statistisch verglichen.

In einer weiteren Ausführungsform wird anhand einer Information zum Typ der Last zumindest eine Simulation der Antriebsvorrichtung zur Bewertung eines betriebsbegleitenden Einsatzmodells und/oder eines vorhersagenden Einsatzmodells durchgeführt. Insbesondere werden begleitende und vorauseilende Simulationen eines realen Antriebs mit einer realen Last durchgeführt. In Abhängigkeit von Ergebnissen der Simulationen werden/wird ein operativer Eingriff auf die Steuerung ausgeführt und/oder ein Vorschlag zur Einstellung dynamischer und operativer Warngrenzen ausgegeben und/oder ein Vorschlag für eine Umparametrierung der Antriebsvorrichtung ausgegeben. Anhand neu ermittelter und/oder neu eingestellter Parametrierdaten wird eine Restlebensdauer der Antriebsvorrichtung berechnet und ausgegeben. In einer Weiterbildung werden Algorithmen für ein so genanntes maschinelles Lernen und verstärktes Lernen (engl.: Machine-Learning-Algorithm, Reinforcement Learning) angewendet.

Um eine Manipulierbarkeit der Antriebsvorrichtung hinsichtlich einer Umparametrierung zu vermeiden, wird beispielsweise ein bidirektionaler Kommunikationskanal, beispielsweise ein virtuelles privates Netzwerk (VPN), verwendet. Das automatische Umparametrieren der Antriebsvorrichtung wird beispielsweise visuell erkennbar gemacht, so dass ein Schichtleiter (Operator) Änderungen sehen und auch rückgängig oder blockierbar machen kann.

Des Weiteren betrifft die Erfindung eine Vorrichtung zur Bestimmung einer Last einer Antriebsvorrichtung, wobei die Vorrichtung zumindest eine mit einer Antriebsvorrichtung koppelbare Sensorik und eine mit der Sensorik gekoppelte oder koppelbare Recheneinheit umfasst. Die Recheneinheit ist insbesondere eine dezentrale Recheneinheit. Die Sensorik ist eingerichtet, die Antriebsvorrichtung im Betrieb betreffende Daten zu erfassen und die erfassten Daten an die Recheneinheit zu übertragen. In der Recheneinheit beziehungsweise in einer mit der Recheneinheit gekoppelten Datenbank sind lasttypische Informationen hinterlegt, wobei die Recheneinheit eingerichtet ist, die erfassten Daten mit den hinterlegten lasttypischen Informationen zu vergleichen und anhand der verglichenen Daten einen Typ der Last zu bestimmen.

Die Datenbank kann beispielsweise eine Komponente einer Recheneinheit, insbesondere einer dezentralen Recheneinheit, sein. Die Recheneinheit ist beispielsweise ein Server und/oder eine Cloud. Die Datenbank ist in diesem Fall also dezentral ausgeführt.

In einer weiteren Ausführungsform umfasst die Sensorik eine Anzahl von Sensoren zur Temperaturmessung und/oder Vibrationsmessung und/oder Luftschallmessung und/oder Drehfeldmessung und/oder Schlupfmessung und/oder Strommessung.

In einer weiteren Ausführungsform umfasst die Vorrichtung zumindest eine Datenverarbeitungseinheit, welche mit der Sensorik gekoppelt ist, wobei die Datenverarbeitungseinheit eingerichtet ist, die mittels der Sensorik erfassten Daten zu empfangen und lokal zu verarbeiten und an die Recheneinheit zu übertragen. Die Datenverarbeitungseinheit ist beispielsweise eine lokale Datenverarbeitungseinheit, insbesondere ein so genanntes Edge-Gerät (Edge-Device). Die Datenverarbeitungseinheit umfasst beispielsweise einen Prozessor, einen Arbeits- und/oder Programmspeicher sowie Schnittstellen, die eine Kommunikation mit der Umgebung ermöglichen. Die Datenverarbeitungseinheit ist beispielsweise lokal in einer Umgebung der Antriebsvorrichtung angeordnet. Die Datenverarbeitungseinheit ist ferner ausgebildet, Parametereinstellungen der Antriebsvorrichtung zu speichern und zu ändern. Die Datenverarbeitungseinheit ist zumindest über einen bidirektionalen Kommunikationskanal mit der Recheneinheit gekoppelt oder koppelbar. Dadurch wird eine Manipulierbarkeit der Antriebsvorrichtung von außen hinsichtlich einer Umparametrierung der Antriebsvorrichtung vermieden. Zum Beispiel ist die Recheneinheit eingerichtet, anhand der ermittelten Information zum Typ der Last geeignete Einstellungsparameter zu ermitteln und diese an die Datenverarbeitungseinheit zu übermitteln. Die Datenverarbeitungseinheit ist beispielsweise mit einer Steuer- und/oder Regelungseinheit der Antriebsvorrichtung gekoppelt. Die Steuer- und/oder Regelungseinheit ist für einen Nutzer der Antriebsvorrichtung zugänglich, welcher anhand der übermittelten Einstellungsparameter die Umparametrierung der Antriebsvorrichtung einstellen kann. Zusätzlich oder alternativ ist die Datenverarbeitungseinheit eingerichtet, die Umparametrierung der Antriebsvorrichtung automatisch vorzunehmen.

Die Recheneinheit ist beispielsweise mit einer Mehrzahl von Datenverarbeitungseinheiten anderer Umgebungen und industriellen Anwendungen gekoppelt oder koppelbar.

Die Sensorik ist weder mit einer Schaltanlage, beispielsweise einem so genannten Motor Control Center (kurz: MCC), der Antriebsvorrichtung noch mit dem Automatisierungssystem eines Antriebsortes verknüpft. Die Sensorik hat keinen Einfluss auf eine Operation der Antriebsvorrichtung.

Die Sensorik ist beispielsweise mit der Antriebsvorrichtung im Bereich eines Motors, einer Ventileinrichtung, einer Arbeitsmaschine und/oder eines Lagers gekoppelt. Zum Beispiel ist die Sensorik in jedem Bereich der Antriebsvorrichtung anordenbar, welcher Temperaturen und/oder Vibrationen ausgesetzt ist und/oder in welchem eine Luftschallmessung, Drehfeldmessung, Schlupfmessung und/oder eine Strommessung durchführbar ist. Zum Beispiel umfasst die Sensorik Drucksensoren, Temperatursensoren, Vibrationssensoren, Schwingungssensoren, Magnetfeldsensoren, Schallsensoren, Beschleunigungssensoren, Stromsensoren und/oder andere magnetische, induktive und/oder optische Sensoren.

In einer weiteren Ausführungsform sind die Sensorik mit der Datenverarbeitungseinheit und die Datenverarbeitungseinheit mit der Recheneinheit über eine drahtlose und/oder drahtgebundene Verbindung gekoppelt. Beispielsweise erfolgt die jeweilige Kommunikation über eine so genannte LAN-, VPN-, DSL- und/oder Funkverbindung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Ausführungsform einer Vorrichtung zur Bestimmung einer Last einer Antriebsvorrichtung,
- FIG 2: schematisch eine weitere Ausführungsform einer Vorrichtung zur Bestimmung einer Last einer Antriebsvorrichtung,
- FIG 3: schematisch eine Ausführungsform einer Antriebsvorrichtung, welche mit der Vorrichtung zur Bestimmung einer Last gekoppelt ist, und
- FIG 4: schematisch eine weitere Ausführungsform einer Antriebsvorrichtung, welche mit der Vorrichtung zur Bestimmung einer Last gekoppelt ist.

Einander entsprechende Teile sind in den Figuren mit denselben Bezugszeichen versehen.

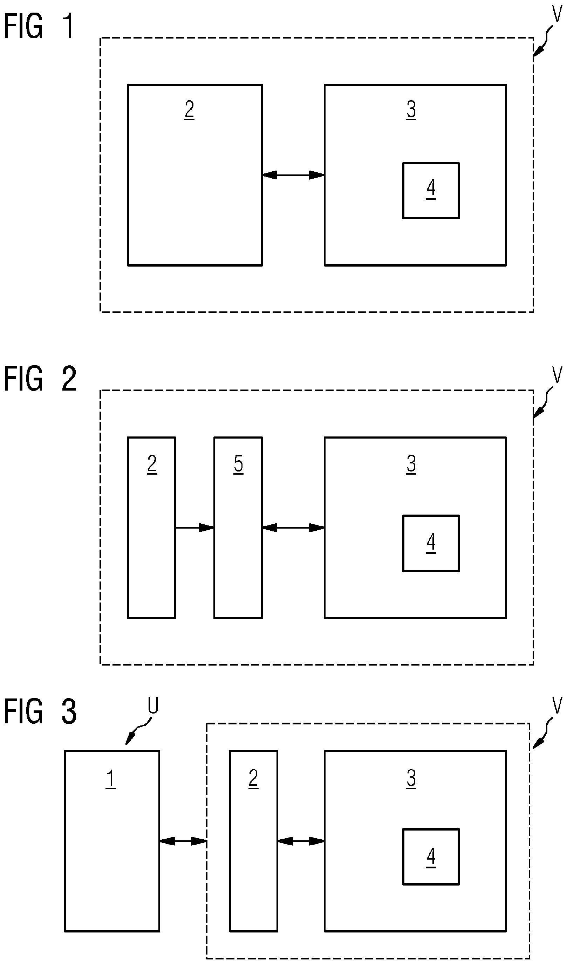

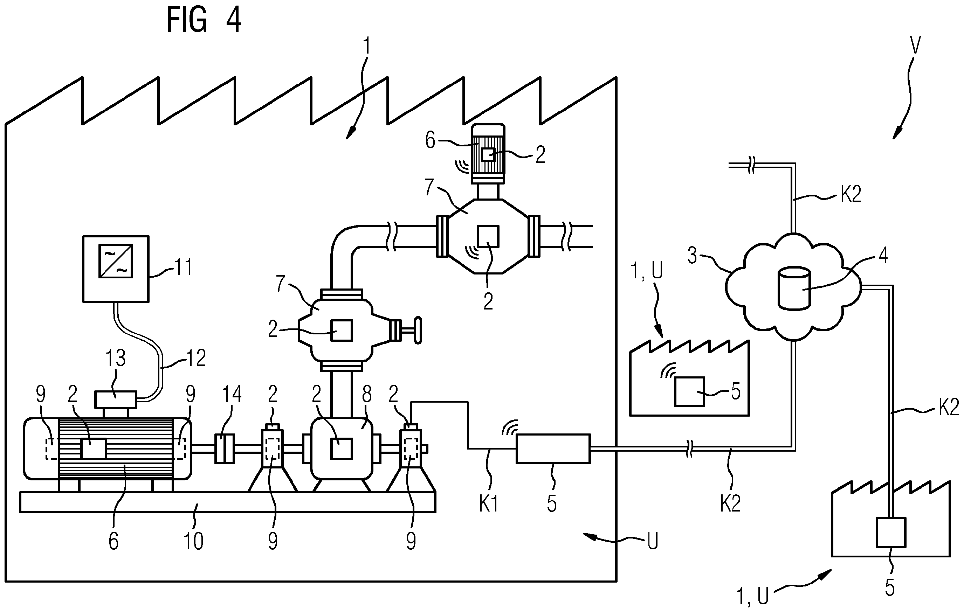

FIG 1 zeigt schematisch eine Ausführungsform einer Vorrichtung V zur Bestimmung einer Last einer in FIG 3 oder FIG 4 schematisch dargestellten Antriebsvorrichtung 1.

Die Vorrichtung V umfasst eine mit der Antriebsvorrichtung 1 koppelbare Sensorik 2. Des Weiteren umfasst die Vorrichtung V eine mit der Sensorik 2 drahtgebunden und/oder drahtlos gekoppelte Recheneinheit 3. Die Recheneinheit 3 ist insbesondere eine dezentrale Recheneinheit 3, wie beispielsweise eine Servereinrichtung. Die Sensorik 2 ist eingerichtet, die Antriebsvorrichtung 1 im Betrieb betreffende Daten zu erfassen und die erfassten Daten an die Recheneinheit 3 zu übertragen. In der Recheneinheit 3 sind lasttypische Informationen hinterlegt. Zum Beispiel umfasst die Recheneinheit 3 zumindest eine Datenbank 4, in welcher lasttypische Informationen hinterlegt sind. Die Recheneinheit 3 ist eingerichtet, die erfassten Daten mit den hinterlegten lasttypischen Informationen zu vergleichen und anhand der verglichenen Daten einen Typ der Last zu bestimmen. Beispielsweise wird der Last eine Antriebsaufgabe zugeordnet. Dadurch wird eine Art der Antriebsvorrichtung bestimmt. Durch diese Informationen können eine Lebensdauer und/oder Restlebensdauer der Antriebsvorrichtung und ihr technisch-wirtschaftlicher Nutzen und ihre Nutzungsdauer ermittelt werden. Beispielsweise ist dem Typ der Last eine Art der Antriebsvorrichtung zugeordnet und es wird ermittelt, ob es sich hierbei beispielsweise um einen pneumatisch, hydraulisch oder elektrisch betriebenen Antrieb handelt.

Als lasttypische Informationen sind Daten aus vorherigen Messungen an derselben Antriebsvorrichtung 1 hinterlegt. D.h., die in der Recheneinheit 3, insbesondere in der Datenbank 4, hinterlegten lasttypischen Informationen basieren auf Daten, die aus einer Anzahl von Messungen an derselben Antriebsvorrichtung 1 bereits ermittelt wurden. Beispielsweise werden die neu erfassten Daten und Zeitreihen mit bereits früher gewonnenen Daten derselben Antriebsvorrichtung 1 verglichen, insbesondere statistisch verglichen.

Des Weiteren sind zusätzlich als lasttypische Informationen Daten aus vorherigen Messungen an unterschiedlichen Antriebsvorrichtungen 1 hinterlegt. D.h., die in der Recheneinheit 3, insbesondere in der Datenbank 4, hinterlegten lasttypischen Informationen basieren auf Daten, die aus einer Anzahl von Messungen unterschiedlicher Antriebsvorrichtungen 1 ermittelt wurden. Beispielsweise werden die neu erfassten Daten und Zeitreihen mit bereits früher gewonnenen Daten anderer Antriebsvorrichtungen 1 verglichen, insbesondere statistisch verglichen.

Die Sensorik 2 umfasst eine Anzahl von Sensoren zur Temperaturmessung und/oder Vibrationsmessung und/oder Luftschallmessung und/oder Drehfeldmessung und/oder Schlupfmessung und/oder Strommessung.

FIG 2 zeigt schematisch eine weitere Ausführungsform einer Vorrichtung V zur Bestimmung einer Last einer in FIG 3 und FIG 4 schematisch dargestellten Antriebsvorrichtung 1.

In der weiteren Ausführungsform umfasst die Vorrichtung V eine Datenverarbeitungseinheit 5, welche mit der Sensorik 2 gekoppelt ist. Die Datenverarbeitungseinheit 5 ist eingerichtet, die mittels der Sensorik 2 erfassten Daten zu empfangen und lokal zu verarbeiten. Zum Beispiel werden die von der Sensorik 2 erfassten Daten analysiert und eine zeitliche Abfolge der Daten und/oder eine kontinuierliche Reihe von Messungen ermittelt. Die Analyse der erfassten Daten und Ermittlung der zeitlichen Abfolge und/oder der Reihe von Messungen werden bzw. wird von der Datenverarbeitungseinheit 5 durchgeführt. In einer Weiterbildung umfasst die Sensorik 2 die Datenverarbeitungseinheit 5. Die Sensorik 2 ist dann beispielsweise eingerichtet, die erfassten Daten ihrer Sensoren zur weiteren Datenverarbeitung heranzuziehen. Anschließend werden diese Daten an die Recheneinheit 3 übermittelt. Zum Beispiel werden Veränderungen und/oder Abweichungen der Last über einen Zeitraum in der Recheneinheit 3 ermittelt und überwacht. Beispielsweise werden ermittelte Zeitreihen der Daten für statistische Vergleiche und mathematische Berechnungen herangezogen. Dadurch wird ermöglicht, Diagnosen zu Fehlern und zur Restlebensdauer sowie zu Einstellparametern zu treffen.

Anhand der Diagnosen werden Einstellparameter zur Ausbesserung der Fehler und zur Erhöhung der Restlebensdauer der Antriebsvorrichtung 1 ermittelt und vorgeschlagen. In einer automatisierten Umgebung U der Antriebsvorrichtung 1 (wie in FIG 2 schematisch gezeigt) können die ermittelten und vorgeschlagenen Einstellparameter direkt an eine Steuerung der Antriebsvorrichtung 1 übertragen und von dieser umgesetzt werden. D.h., ein operativer Eingriff auf die Steuerung kann automatisch erfolgen. Alternativ oder zusätzlich wird ein Vorschlag zur Änderung der Einstellparameter und Umparametrierung der Antriebsvorrichtung 1 beispielsweise über eine Anzeigevorrichtung, wie einem Bildschirm, ausgegeben. Einem Nutzer können so genannte Key Performance Indicators (kurz KPI) und Optimierungspotentiale hinsichtlich des Betriebs der Antriebsvorrichtung 1 angezeigt werden. Die Ausführung der Umparametrierung erfolgt je nach Bedarf des Nutzers der Antriebsvorrichtung 1 manuell. In einer Weiterbildung werden dynamische und operative Warngrenzen eingestellt.

Die Datenverarbeitungseinheit 5 ist weiterhin eingerichtet, die mittels der Sensorik 2 erfassten Daten an die Recheneinheit 3 zu übertragen. Die Datenverarbeitungseinheit 5 ist beispielsweise eine lokale Datenverarbeitungseinheit 5, insbesondere ein so genanntes Edge-Gerät (Edge-Device) und/oder Edge-Computer. Die Datenverarbeitungseinheit 5 umfasst beispielsweise einen Prozessor, einen Arbeits- und/oder Programmspeicher sowie Kommunikationsschnittstellen, die eine Kommunikation mit der Umgebung U ermöglichen. Die Datenverarbeitungseinheit 5 ist beispielsweise lokal in der Umgebung U der Antriebsvorrichtung 1 angeordnet. Die Datenverarbeitungseinheit 5 ist ferner ausgebildet, Parametereinstellungen der Antriebsvorrichtung 1 zu speichern und zu ändern. Die Datenverarbeitungseinheit 5 ist zumindest über einen bidirektionalen Kommunikationskanal mit der Recheneinheit 3 gekoppelt. Dadurch wird eine Manipulierbarkeit der Antriebsvorrichtung 1 von außen hinsichtlich einer Umparametrierung der Antriebsvorrichtung 1 vermieden. Zum Beispiel ist die Recheneinheit 3 eingerichtet, anhand der ermittelten Information zum Typ der Last geeignete Einstellungsparameter zu ermitteln und diese an die Datenverarbeitungseinheit 5 und/oder an eine Steuer- und/oder Regelungseinheit der Antriebsvorrichtung 1 zu übertragen. Die Datenverarbeitungseinheit 5 ist beispielsweise mit einer Steuer- und/oder Regelungseinheit der Antriebsvorrichtung 1 gekoppelt. Die Steuer- und/oder Regelungseinheit ist für einen Nutzer der Antriebsvorrichtung 1 zugänglich, welcher anhand der übermittelten Einstellungsparameter die Umparametrierung der Antriebsvorrichtung 1 einstellen und/oder einsehen kann. Zusätzlich oder alternativ ist die Datenverarbeitungseinheit 5 eingerichtet, die Umparametrierung der Antriebsvorrichtung 1 automatisch vorzunehmen.

Zum Beispiel ist die Sensorik 2 mit der Datenverarbeitungseinheit 5 und die Datenverarbeitungseinheit 5 mit der Recheneinheit 3 über eine drahtlose und/oder drahtgebundene Verbindung gekoppelt. Beispielsweise erfolgt die jeweilige Kommunikation über eine so genannte LAN-, VPN-, DSL- und/oder Funkverbindung.

FIG 3 zeigt schematisch eine Ausführungsform einer Antriebsvorrichtung 1, welche mit der Vorrichtung V zur Bestimmung einer Last der Antriebsvorrichtung 1 gekoppelt ist. Die Antriebsvorrichtung 1 wird beispielsweise in Förderanlagen, Pumpen, Kompressoren, Lüftern, Werkzeugmaschinen und in anderen industriellen Anwendungen eingesetzt.

Die Sensorik 2 ist weder an einer Schaltanlage, beispielsweise an einem so genannten Motor Control Center (kurz: MCC), der Antriebsvorrichtung 1 noch am Automatisierungssystem der Umgebung U verknüpft. Die Sensorik 2 hat also keinen Einfluss auf eine Operation der Antriebsvorrichtung 1.

Die Sensorik 2 ist beispielsweise mit der Antriebsvorrichtung 1 im Bereich eines Motors 6, einer Ventileinrichtung 7, einer Arbeitsmaschine 8 und/oder eines Lagers 9 gekoppelt, wie in FIG 3 gezeigt. Zum Beispiel sind Sensoren der Sensorik 2 in jedem Bereich der Antriebsvorrichtung 1 anordenbar, welcher Temperaturen und/oder Vibrationen ausgesetzt ist und/oder in welchem eine Luftschallmessung, Drehfeldmessung, Schlupfmessung und/oder eine Strommessung durchführbar ist. Zum Beispiel umfasst die Sensorik 2 Drucksensoren, Temperatursensoren, Vibrationssensoren, Schwingungssensoren, Magnetfeldsensoren, Schallsensoren, Beschleunigungssensoren, Stromsensoren und/oder andere magnetische, induktive und/oder optische Sensoren.

FIG 4 zeigt schematisch eine weitere Ausführungsform einer Antriebsvorrichtung 1, welche mit einer Vorrichtung V zur Bestimmung einer Last der Antriebsvorrichtung 1 gekoppelt ist.

Die Antriebsvorrichtung 1 umfasst beispielsweise eine Mehrzahl von aufeinander wirkenden Komponenten, welche zumindest teilweise auf einem Grundrahmen 10 angeordnet sind. Zum Beispiel umfasst die Antriebsvorrichtung 1 einen ersten Motor 6, welcher mit einem Umrichter 11 über eine Kabelanordnung 12 verbunden ist. Hierfür weist der Motor 6 eine Schnittstelle 13, beispielsweise in Form eines Terminals oder eines Klemmkastens, auf. Der Motor 6 ist beidseitig mit einem Lager 9 versehen. Des Weiteren ist der Motor 6 mit einer Sensorik 2 bzw. mit einer Anzahl von Sensoren versehen. Über eines der Lager 9 ist der Motor 6 mit einer Kupplung 14 verbunden, welche wiederum mit einem weiteren Lager 9 und anschließend einer Arbeitsmaschine 8, beispielsweise einer Pumpe, verbunden ist. Die Arbeitsmaschine 8 ist beispielsweise mit der Sensorik 2 bzw. mit einer Anzahl von Sensoren versehen. Die Arbeitsmaschine 8 ist beispielsweise mit zwei Lagern 9 verbunden. Diese Lager 9 sind ebenfalls mit einer Sensorik 2 bzw. mit Sensoren der Sensorik 2 versehen. Des Weiteren ist die Arbeitsmaschine 8 über eine Rohranordnung mit einer Mehrzahl von Ventileinrichtungen 7 gekoppelt. Beispielsweise ist eine der Ventileinrichtungen 7 mit einem weiteren Motor 6 gekoppelt. Sowohl der weitere Motor 6 als auch die Ventileinrichtungen 7 sind mit einer Sensorik 2 bzw. Sensoren der Sensorik 2 versehen. Die Sensorik 2 bzw. die Sensoren der Sensorik 2 sind jeweils eingerichtet, Daten aus zumindest einer Temperaturmessung, Vibrationsmessung, Luftschallmessung, Drehfeldmessung, Schlupfmessung und/oder Strommessung zu erfassen.

Die jeweiligen Sensoren der Sensorik 2 sind beispielsweise über eine Kommunikationsverbindung K1, wie eine LAN-Verbindung und/oder drahtlose Funkverbindungen, mit der Datenverarbeitungseinheit 5 gekoppelt. Die Datenverarbeitungseinheit 5 empfängt die mittels der Sensoren erfassten Daten und verarbeitet diese lokal.

Die Datenverarbeitungseinheit 5 ist beispielsweise über eine weitere Kommunikationsverbindung K2, beispielsweise einer Fernnetzwerkverbindung (engl.: Remote Network Connection) wie einer VPN- oder DSL-Verbindung, mit der Recheneinheit 3 gekoppelt. Die Recheneinheit 3 ist im gezeigten Ausführungsbeispiel als Cloud dargestellt. Die Recheneinheit 3 umfasst die Datenbank 4, auf welcher lasttypische Informationen hinterlegt sind. Die Recheneinheit 3 ist eingerichtet, die von der Datenverarbeitungseinheit 5 neu übermittelten Daten mit den hinterlegten lasttypischen Informationen zu vergleichen und einen Rückschluss auf den Typ der Last zu ziehen.

Die Recheneinheit 3 ist beispielsweise mit einer Mehrzahl von Datenverarbeitungseinheiten 5 anderer Antriebsvorrichtungen 1 in anderen Umgebungen U gekoppelt. Dadurch kann eine Masse an Informationen, beispielsweise lasttypischen Informationen, von einer Mehrzahl gleicher und/oder unterschiedlicher Antriebsvorrichtungen 1 und Umgebungen U gesammelt und verarbeitet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bestimmung einer Last einer Antriebsvorrichtung (1), wobei
- die Antriebsvorrichtung (1) mit zumindest einer Sensorik (2) versehen ist, welche mit einer Recheneinheit (3) gekoppelt wird,
- mittels der Sensorik (2) unterschiedliche, die Antriebsvorrichtung (1) im Betrieb betreffende Daten erfasst werden,
- die erfassten Daten an die Recheneinheit (3) übertragen werden und
- die erfassten Daten mit in der Recheneinheit (3) hinterlegten lasttypischen Informationen verglichen werden, wobei anhand der verglichenen Daten ein Typ der Last bestimmt wird.

2. Verfahren nach Anspruch 1, wobei die Sensorik (2) mit einer Datenverarbeitungseinheit (5) gekoppelt wird, mittels welcher die erfassten Daten lokal verarbeitet und an die Datenbank (4) übertragen werden.

3. Verfahren nach Anspruch 1 oder 2, wobei mittels der Sensorik (2) Daten aus zumindest einer
- Temperaturmessung,
- Vibrationsmessung,
- Luftschallmessung,
- Drehfeldmessung,
- Schlupfmessung und/oder
- Strommessung
erfasst werden.

4. Verfahren nach einem der vorhergehenden Ansprüche, wobei die erfassten Daten analysiert werden und eine zeitliche Abfolge der Daten und/oder eine kontinuierliche Reihe von Messungen ermittelt wird.

5. Verfahren nach einem der vorhergehenden Ansprüche, wobei als lasttypische Informationen Daten aus vorherigen Messungen an derselben Antriebsvorrichtung (1) hinterlegt sind.

6. Verfahren nach einem der vorhergehenden Ansprüche, wobei als lasttypische Informationen Daten aus vorherigen Messungen an unterschiedlichen Antriebsvorrichtungen hinterlegt sind.

7. Verfahren nach einem der vorhergehenden Ansprüche, wobei anhand einer Information zum Typ der Last zumindest eine Simulation der Antriebsvorrichtung (1) zur Bewertung eines betriebsbegleitenden Einsatzmodells und/oder eines vorhersagenden Einsatzmodells durchgeführt wird.

8. Vorrichtung zur Bestimmung einer Last einer Antriebsvorrichtung (1), umfassend zumindest
- eine mit der Antriebsvorrichtung (1) koppelbare Sensorik (2) und
- eine mit der Sensorik (2) gekoppelte Recheneinheit (3), wobei
- die Sensorik (2) eingerichtet ist, die Antriebsvorrichtung (1) im Betrieb betreffende Daten zu erfassen und die erfassten Daten an die Datenbank (4) zu übertragen, wobei
- in der Recheneinheit (3) lasttypische Informationen hinterlegt sind, und die Recheneinheit (3) eingerichtet ist, die erfassten Daten mit den in der Recheneinheit (3) hinterlegten lasttypischen Informationen zu vergleichen und anhand der verglichenen Daten einen Typ der Last zu bestimmen.

9. Vorrichtung nach Anspruch 8, wobei die Sensorik (2) eine Anzahl von Sensoren zur
- Temperaturmessung,
- Vibrationsmessung,
- Luftschallmessung,
- Drehfeldmessung,
- Schlupfmessung und/oder
- Strommessung
umfasst.

10. Vorrichtung nach Anspruch 8 oder 9, umfassend zumindest eine Datenverarbeitungseinheit (5), welche mit der Sensorik (2) gekoppelt ist, wobei die Datenverarbeitungseinheit (5) eingerichtet ist, die mittels der Sensorik (2) erfassten Daten zu empfangen und lokal zu verarbeiten und an die Recheneinheit (3) zu übertragen.
